# EUROPEAN PATENT SPECIFICATION

(11) **EP 3 065 035 B1**
(45) Date of publication and mention of the grant of the patent: **14.11.2018**
(21) Application number: 13897861.4
(22) Date of filing: 25.11.2013
(51) Int. Cl.: G06F 3/041, G06F 3/044

(54) **INFORMATION PROCESSING METHOD AND ELECTRONIC DEVICE**
INFORMATIONSVERARBEITUNGSVERFAHREN UND ELEKTRONISCHE VORRICHTUNG
PROCÉDÉ DE TRAITEMENT D'INFORMATIONS ET DISPOSITIF ÉLECTRONIQUE

(43) Date of publication of application: 07.09.2016
(73) Proprietor: Huawei Device (Dongguan) Co., Ltd., Dongguan, Guangdong 523808 (CN)
(72) Inventor: MA, Bo, Shenzhen Guangdong 518129 (CN); MENG, Chao, Shenzhen Guangdong 518129 (CN); WANG, Yue, Shenzhen Guangdong 518129 (CN)
(74) Representative: Epping - Hermann - Fischer
(86) International application number: PCT/CN2013/087771
(87) International publication number: WO 2015/074272

(56) References cited:
- CN-A- 101 840 295
- CN-A- 102 855 032
- US-A1- 2008 111 714
- US-A1- 2013 207 935

## Description

### TECHNICAL FIELD

The present invention relates to the field of electronic technologies, and in particular, to an information processing method and an electronic device.

### BACKGROUND

As technologies develop, a capacitive touchscreen has become a standard configuration of many electronic devices (such as smartphones and tablet computers). The capacitive touchscreen is not only a display apparatus, but also an input apparatus, which can detect a finger touch region of a user and make a corresponding response.

In a current electronic device configured with a capacitive touchscreen, water is not allowed on a surface of the capacitive touchscreen. If there is water on the surface, the electronic device cannot recognize a finger touch region of a user, so that the user cannot normally use the capacitive touchscreen to perform a touch operation.

US 2008/111714 A1 discloses an apparatus and a method for converting a capacitance measured on a sensor element to a digital code. The apparatus may include a switching capacitor as a sensor element of a sensing device, and a sigma-delta modulator coupled to the sensor element to convert a capacitance measured on the sensor element to a digital code. The switching capacitor is in a feedback loop of the sigma-delta modulator. The method may include measuring a capacitance on a sensor element of a sensing device using a sigma-delta modulator, and converting the capacitance measured on the sensor element to a digital code.

US 2013/0207935 A1 discloses a touch panel device including an electrostatic capacitance touch panel of mutual capacitance type which includes transmission-side electrodes and reception-side electrodes; a detecting unit which detects a contact with the electrostatic touch panel and outputs contact information; and a detection signal variation calculating unit which calculates and outputs detection signal variations of the transmission-side electrodes and the reception-side electrodes based on the contact information. The touch panel device further includes: a variation distribution calculating unit which calculates and outputs a variation distribution of the detection signals based on the detection signal variations; and a determining unit which determines that an object contacting the electrostatic touch panel is a drop of water when a peak value of the variation distribution of the detection signals is a predetermined negative threshold or less.

### SUMMARY

The present invention provides an information processing method and an electronic device, so as to resolve a technical problem in the prior art, with an electronic device configured with a capacitive touchscreen, that the electronic device cannot recognize a finger touch region of a user when there is water on a surface of the capacitive touchscreen.
The invention is defined by the independent claims. Advantageous embodiments of the invention are given in the sub-claims.

According to a first aspect, an information processing method is provided, including:
acquiring a current capacitance corresponding to each sensing point on a capacitive touchscreen of an electronic device;
separately subtracting a preset capacitance from the current capacitance corresponding to each sensing point to obtain a capacitance difference corresponding to each sensing point, where the preset capacitance is a capacitance of any one of each sensing point
   when there is neither water nor a finger touch operation on the capacitive touchscreen; and
determining, according to the capacitance difference corresponding to each sensing point, a touch region on which a finger touch operation on the capacitive touchscreen acts.

With reference to the first aspect, in a first possible implementation manner, the determining, according to the capacitance difference corresponding to each sensing point, a touch region on which a finger touch operation on the capacitive touchscreen acts includes:
determining a sensing region that is formed by sensing points whose capacitance difference is a negative value among all the sensing points as a first sensing region;
determining a sensing region that is formed by sensing points whose capacitance difference is a positive value among all the sensing points as a second sensing region; and
determining, according to a location relationship between the first sensing region and the second sensing region, the touch region on which the finger touch operation on the capacitive touchscreen acts.

With reference to the first possible implementation manner of the first aspect, in a second possible implementation manner, the determining, according to a location relationship between the first sensing region and the second sensing region, the touch region on which the finger touch operation on the capacitive touchscreen acts includes:
if the first sensing region and the second sensing region are not connected, determining the first sensing region as the touch region on which the finger touch operation acts; and/or
if the first sensing region and the second sensing region are connected and the first sensing region is surrounded by the second sensing region, determining a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

With reference to the first possible implementation manner of the first aspect, or the second possible implementation manner of the first aspect, in a third possible implementation manner, the method further includes:
determining the second sensing region as a water-covered region.

With reference to the first possible implementation manner of the first aspect, or the second possible implementation manner of the first aspect, or the third possible implementation manner of the first aspect, in a fourth possible implementation manner, the method further includes:
acquiring an area of the second touch region; and
controlling the electronic device to power off when the area of the second touch region is larger than a preset area.

Based on a same invention concept, according to a second aspect, an electronic device is provided, including:
a first acquiring unit, configured to acquire a current capacitance corresponding to each sensing point on a capacitive touchscreen of the electronic device;
a computing unit, configured to receive the current capacitance corresponding to each sensing point from the first acquiring unit, and separately subtracting a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen; and
a first determining unit, configured to receive the capacitance difference corresponding to each sensing point from the computing unit, and determine, according to the capacitance difference corresponding to each sensing point, a touch region on which a finger touch operation on the capacitive touchscreen acts.

With reference to the second aspect, in a first possible implementation manner, the first determining unit includes:
a first determining module, configured to determine a sensing region that is formed by sensing points whose capacitance difference is a negative value among all the sensing points as a first sensing region;
a second determining module, configured to determine a sensing region that is formed by sensing points whose capacitance difference is a positive value among all the sensing points as a second sensing region; and
a third determining module, configured to determine, according to a location relationship between the first sensing region and the second sensing region, the touch region on which the finger touch operation on the capacitive touchscreen acts.

With reference to the first possible implementation manner of the second aspect, in a second possible implementation manner, the third determining module is further configured to:
if the first sensing region and the second sensing region are not connected, determine the first sensing region as the touch region on which the finger touch operation acts; and/or
if the first sensing region and the second sensing region are connected and the first sensing region is surrounded by the second sensing region, determine a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

With reference to the first possible implementation manner of the second aspect, or the second possible implementation manner of the second aspect, in a third possible implementation manner, the electronic device further includes:
a second determining unit, configured to determine the second sensing region as a water-covered region.

With reference to the first possible implementation manner of the second aspect, or the second possible implementation manner of the second aspect, or the third possible implementation manner of the second aspect, in a fourth possible implementation manner, the electronic device further includes:
a second acquiring unit, configured to acquire an area of the second touch region; and
a control unit, configured to control the electronic device to power off when the area of the second touch region is larger than a preset area.

Based on a same invention concept, according to a third aspect, an electronic device is provided, including:
a capacitive touchscreen; and
a processor, connected to the capacitive touchscreen and configured to: acquire a current capacitance corresponding to each sensing point on a capacitive touchscreen of the electronic device; separately subtract a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen; and determine, according to the capacitance difference corresponding to each sensing point, a touch region on which a finger touch operation on the capacitive touchscreen acts.

With reference to the third aspect, in a first possible implementation manner, the processor is further configured to:
determine a sensing region that is formed by sensing points whose capacitance difference is a negative value among all the sensing points as a first sensing region; determine a sensing region that is formed by sensing points whose capacitance difference is a positive value among all the sensing points as a second sensing region; and determine, according to a location relationship between the first sensing region and the second sensing region, the touch region on which the finger touch operation on the capacitive touchscreen acts.

With reference to the first possible implementation manner of the third aspect, in a second possible implementation manner, the processor is further configured to:
if the first sensing region and the second sensing region are not connected, determine the first sensing region as the touch region on which the finger touch operation acts; and/or
if the first sensing region and the second sensing region are connected and the first sensing region is surrounded by the second sensing region, determine a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

With reference to the first possible implementation manner of the third aspect, or the second possible implementation manner of the third aspect, in a third possible implementation manner, the processor is further configured to:
determine the second sensing region as a water-covered region.

With reference to the first possible implementation manner of the third aspect, or the second possible implementation manner of the third aspect, or the third possible implementation manner of the third aspect, in a fourth possible implementation manner, the processor is further configured to:
acquire an area of the second touch region; and control the electronic device to power off when the area of the second touch region is larger than a preset area.

A capacitance corresponding to a sensing point decreases when there is a finger touch on the sensing point on a capacitive touchscreen, and the capacitance corresponding to the sensing point increases when there is water covering the sensing point. Therefore, in the embodiments of the present application, a capacitance difference corresponding to each sensing point is obtained by acquiring a current capacitance corresponding to each sensing point on the capacitive touchscreen of an electronic device, and separately subtracting a preset capacitance from the current capacitance corresponding to each sensing point, where the preset capacitance is a capacitance of any one of each sensing point when there is neither water nor a finger touch operation on the capacitive touchscreen; and a touch region on which the finger touch operation on the capacitive touchscreen acts is determined according to the capacitance difference corresponding to each sensing point. This effectively resolves a technical problem in the prior art, with an electronic device configured with a capacitive touchscreen, that the electronic device cannot recognize a finger touch region of a user when there is water on the surface of the capacitive touchscreen, and achieves a technical effect that the electronic device can still determine the touch region on which the finger touch operation acts when there is water on a surface of the capacitive touchscreen, so that a user can perform a normal touch operation on the capacitive touchscreen whose surface is covered by water.

### BRIEF DESCRIPTION OF DRAWINGS

FIG. 1 is a flowchart of an information processing method according to Embodiment 1 of the present invention;
FIG. 1A is a schematic diagram of a condition of capacitance differences corresponding to sensing points in a sensing region when there is a finger touch operation on the sensing region on a capacitive touchscreen according to Embodiment 1 of the present invention;
FIG. 1B is a schematic diagram of a condition of capacitance differences corresponding to sensing points in a sensing region when there is water covering the sensing region on a capacitive touchscreen according to Embodiment 1 of the present invention;
FIG. 1C is a schematic diagram of a condition of capacitance differences corresponding to sensing points in a water-covered sensing region and a finger-touched touch region, when there are both water and a finger touch operation on a capacitive touchscreen and the water-covered sensing region and the finger-touched touch region are not connected, according to Embodiment 1 of the present invention;
FIG. 1D is a schematic diagram of a condition of capacitance differences corresponding to sensing points in a water-covered sensing region and a finger-touched touch region, when there are both water and a finger touch operation on a capacitive touchscreen, and the water-covered sensing region and the finger-touched touch region are connected, and the finger-touched touch region is surround by the water-covered sensing region, according to Embodiment 1 of the present invention;
FIG. 2 is a schematic structural diagram of an electronic device according to Embodiment 2 of the present application; and

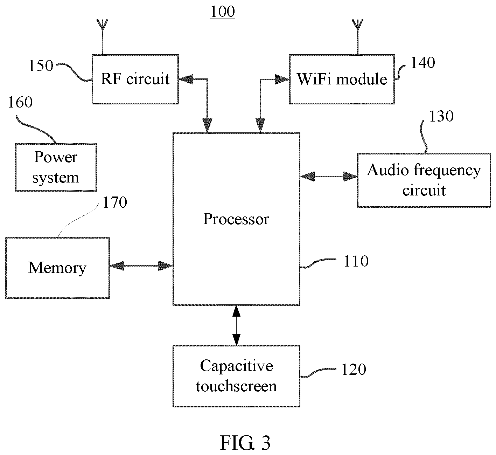

FIG. 3 is a schematic structural diagram of an electronic device according to Embodiment 3 of the present application.

### DESCRIPTION OF EMBODIMENTS

Embodiments of the present invention provide an information processing method and an electronic device, so as to resolve a technical problem in the prior art, with an electronic device configured with a capacitive touchscreen, that the electronic device cannot recognize a finger touch region of a user when there is water on a surface of the capacitive touchscreen.

To resolve the foregoing technical problem, a general idea of the technical solutions in the embodiments of the present application is as follows:
An information processing method includes:
acquiring a current capacitance corresponding to each sensing point on the capacitive touchscreen of the electronic device;
separately subtracting a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen; and
determining, according to the capacitance difference corresponding to each sensing point, a touch region on which a finger touch operation on the capacitive touchscreen acts.

A capacitance corresponding to a sensing point decreases when there is a finger touch on the sensing point on a capacitive touchscreen, and the capacitance corresponding to the sensing point increases when there is water covering the sensing point. Therefore, in the embodiments of the present application, the capacitance difference corresponding to each sensing point is obtained by acquiring the current capacitance corresponding to each sensing point on the capacitive touchscreen of the electronic device, and separately subtracting the preset capacitance from the current capacitance corresponding to each sensing point, where the preset capacitance is the capacitance of any one of all the sensing points when there is neither water nor a finger touch operation on the capacitive touchscreen; and the touch region on which the finger touch operation on the capacitive touchscreen acts is determined according to the capacitance difference corresponding to each sensing point. This effectively resolves a technical problem in the prior art, with an electronic device configured with a capacitive touchscreen, that the electronic device cannot recognize a finger touch region of a user when there is water on a surface of the capacitive touchscreen, and achieves a technical effect that the electronic device can still determine the touch region on which the finger touch operation acts when there is water on the surface of the capacitive touchscreen, so that a user can perform a normal touch operation on the capacitive touchscreen whose surface is covered by water.

To make the objectives, technical solutions, and advantages of the embodiments of the present application more clearly, the following clearly and completely describes the technical solutions in the embodiments of the present application with reference to the accompanying drawings in the embodiments of the present application. Apparently, the described embodiments are merely a part rather than all of the embodiments of the present application. All other embodiments obtained by a person of ordinary skill in the art based on the embodiments of the present application without creative efforts shall fall within the protection scope of the present invention.

It is noted first that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It is noted then that the "electronic device" in this specification may be: a mobile phone, a tablet computer, a vehicle-mounted computer, a digital camera, a gaming console, or the like, and the electronic device is configured with a capacitive touchscreen.

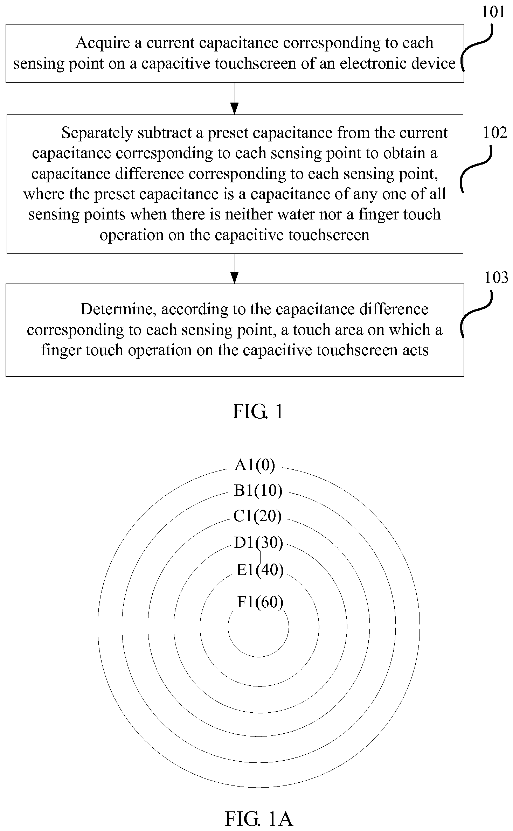

It is noted then that each closed curve represents a collection of sensing points whose capacitance differences are same on the capacitive touchscreen in FIG. 1A to FIG. ID in the specification. A combination of a letter and a number outside a pair of brackets on each closed curve represents a corresponding closed curve. A number in the brackets that follows each letter represents a reference value of a current capacitance difference of a sensing point on the corresponding closed curve. The reference value is directly proportional to an actual capacitance difference. Specifically, when the reference value is a positive value, the corresponding actual capacitance difference is also a positive value; when the reference value is a negative value, the corresponding actual capacitance difference is also a negative value; when the reference value is 0, the corresponding actual capacitance difference is also 0. For example, an outermost closed curve in FIG. 1A is described as a closed curve A1 and reference values of current capacitance differences corresponding to all sensing points on the closed curve A1 are 0; an innermost closed curve in FIG. 1A is described as a closed curve F1 and reference values of current capacitance differences corresponding to all sensing points on the closed curve F1 are 60. In addition, reference values of all sensing points on the sensing region outside a closed curve Ai (i is a positive integer smaller than 6) are 0.

### Embodiment 1

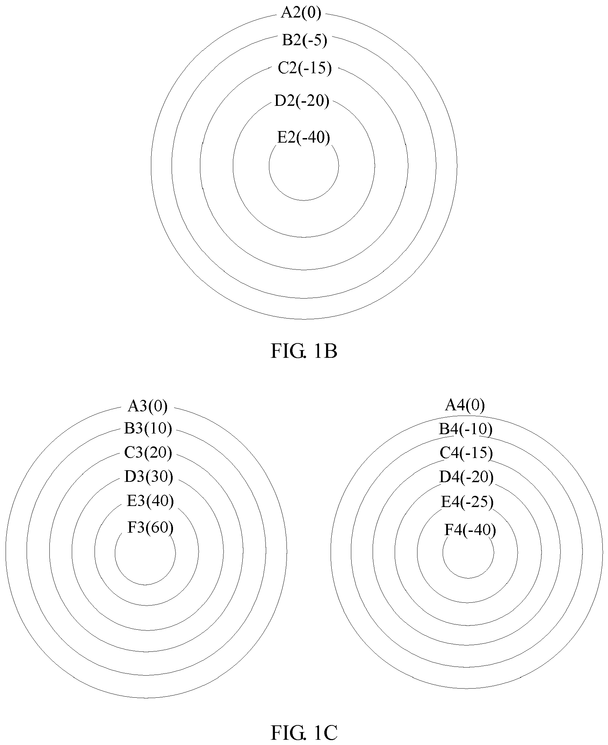

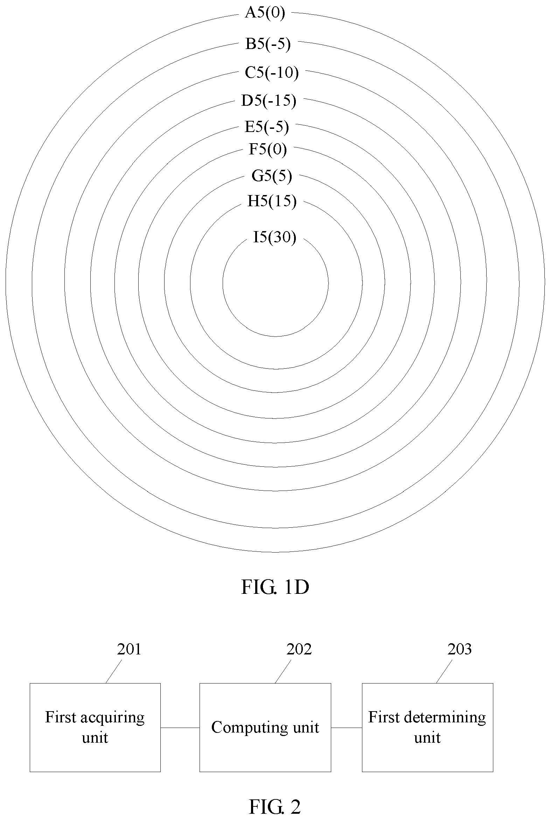

The embodiment provides an information processing method. As shown in FIG. 1, the information processing method includes:
Step 101: Acquire a current capacitance corresponding to each sensing point on a capacitive touchscreen of an electronic device.
Step 102: Separately subtract a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen.
Step 103: Determine, according to the capacitance difference corresponding to each sensing point, a touch region on which a finger touch operation on the capacitive touchscreen acts.

Specifically, as shown in FIG. 1A, FIG. 1A is a schematic diagram of a condition of reference values of capacitance differences of sensing points in a sensing region when there is a finger touch on the sensing region on a capacitive touchscreen. When there is a finger touch on a sensing region inside a closed curve A1, and for all sensing points inside the closed curve A1, a sensing point nearer to a center indicates a greater corresponding capacitance difference. For example, reference values of capacitance differences corresponding to the sensing points on the closed curve A1 are 0, but reference values of capacitance differences corresponding to sensing points on a closed curve F1 are 60. Generally, sensing points inside the closed curve F1 are sensing points touched by a central part of a finger pulp. It can be learned from FIG. 1A that when there is a finger touch on a sensing region on a capacitive touchscreen, capacitance differences of sensing points in the sensing region are all positive values.

Theoretically, when there is a finger touch on a sensing region on a capacitive touchscreen, reference values of capacitance differences corresponding to sensing points inside the sensing region are all positive values, and a sensing point nearer to a center indicates a greater corresponding capacitance difference. However, in fact, because there may be impurities on a finger and/or the touch region, error signals are generated, and the reference values of the capacitance differences corresponding to the sensing points in the region are inconsistent with theoretical values. In this case, these error signals should be filtered out.

In a specific implementation process, when there is a finger touch on a capacitive touchscreen, reference values of equal capacitance differences corresponding to sensing points in a touch region corresponding to a finger may be distributed in many shapes, which include but are not limited to a circular ring in FIG. 1A and may be an ellipse or another irregular closed curve.

More specifically, as shown in FIG. 1B, FIG. 1B is a schematic diagram of a condition of capacitance differences corresponding to sensing points in a sensing region when there is water covering the sensing region on a capacitive touchscreen. When there is water covering a sensing region inside a closed curve A2, and for all sensing points inside the closed curve A2, a sensing point nearer to a center indicates a smaller corresponding capacitance difference. For example, reference values of capacitance differences corresponding to the sensing points on the closed curve A2 are 0, but reference values of capacitance differences corresponding to sensing points on a closed curve E2 are - 40. Generally, water on the sensing points inside the closed curve E2 is the thickest. It can be learned from FIG. 1B that when there is water covering a sensing region on a capacitive touchscreen, capacitance differences of sensing points in the sensing region are all negative values.

In a specific implementation process, when there is water on a capacitive touchscreen, reference values of capacitance differences corresponding to the sensing points on sensing region may be distributed in many shapes, which include but are not limited to a circular ring in FIG. 1B and may be an ellipse or another irregular closed curve.

Theoretically, when there is water covering a sensing region on a capacitive touchscreen, reference values of capacitance differences corresponding to sensing points inside the sensing region are all negative values, and a sensing point nearer to a center indicates a smaller corresponding capacitance difference. However, in fact, because there may be impurities on a finger and/or the touch region, error signals are generated, and the reference values of the capacitance differences corresponding to the sensing points in the region are inconsistent with theoretical values. In this case, these error signals should be filtered out.

A capacitance corresponding to a sensing point decreases when there is a finger touch on the sensing point on a capacitive touchscreen, and the capacitance corresponding to the sensing point increases when there is water covering the sensing point. Therefore, in this embodiment of the present application, the capacitance difference corresponding to each sensing point is obtained by acquiring the current capacitance corresponding to each sensing point on the capacitive touchscreen of the electronic device, and separately subtracting the preset capacitance from the current capacitance corresponding to each sensing point, where the preset capacitance is the capacitance of any one of all the sensing points when there is neither water nor a finger touch operation on the capacitive touchscreen; and the touch region on which the finger touch operation on the capacitive touchscreen acts is determined according to the capacitance difference corresponding to each sensing point. This effectively resolves a technical problem in the prior art, with an electronic device configured with a capacitive touchscreen, that the electronic device cannot recognize a finger touch region of a user when there is water on a surface of the capacitive touchscreen, and achieves a technical effect that the electronic device can still determine the touch region on which the finger touch operation acts when there is water on the surface of the capacitive touchscreen, so that a user can perform a normal touch operation on the capacitive touchscreen whose surface is covered by water.

In this embodiment of the present invention, optionally, the step 103 includes:
determining a sensing region that is formed by sensing points whose capacitance difference is a negative value among all the sensing points as a first sensing region;
determining a sensing region that is formed by sensing points whose capacitance difference is a positive value among all the sensing points as a second sensing region; and
determining, according to a location relationship between the first sensing region and the second sensing region, the touch region on which the finger touch operation on the capacitive touchscreen acts.

In a specific implementation process, as shown in FIG. 1C, reference values of capacitance differences corresponding to sensing points on a sensing region inside a closed curve A3 are all positive values, and therefore the sensing region inside the closed curve A3 is determined as the first sensing region; reference values of capacitance differences corresponding to sensing points on a sensing region inside a closed curve A4 are all negative values, and therefore the sensing region inside the closed curve A4 is determined as the second sensing region. If the first sensing region and the second sensing region are not connected, it is determined that there is a finger touch on the first sensing region (that is, the sensing region inside the closed curve A4).

In this embodiment of the present invention, optionally, the information processing method further includes:
if the first sensing region and the second sensing region are not connected, determining the first sensing region as the touch region on which the finger touch operation acts; and/or
if the first sensing region and the second sensing region are connected and the first sensing region is surrounded by the second sensing region, determining a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

In a specific implementation process, as shown in FIG. 1D, reference values of capacitance differences corresponding to all sensing points on a sensing region between a closed curve A5 and a closed curve F5 are all negative values, and therefore the sensing region between the closed curve A5 and the closed curve F5 is determined as the second sensing region; reference values of capacitance differences corresponding to sensing points on a sensing region inside the closed curve F5 are all positive values, and therefore the sensing region inside the closed curve F5 is determined as the first sensing region. Because the first sensing region is surrounded by the second sensing region, a sensing region inside a closed curve D5 is determined as the third sensing region, and it is determined that there is a finger touch on the third sensing region, where sensing points on the closed curve D5 are sensing points corresponding to an inflection point at which the capacitance difference turns from a decreasing trend to an increasing trend.

In this embodiment of the present invention, optionally, the information processing method further includes:
determining the second sensing region as a water-covered region. As shown in FIG. 1C, the sensing region inside the closed curve A4 may be determined as a water-covered region; as shown in FIG. 1D, the sensing region between the closed curve A5 and the closed curve F5 may be determined as a water-covered region.

In this embodiment of the present invention, optionally, the information processing method further includes:
acquiring an area of the second touch region; and controlling the electronic device to power off when the area of the second sensing region is larger than a preset area.

In a specific implementation process, a size of the preset area ranges from 50% to 80% of a total area of the capacitive touchscreen. When it is determined that the area of the second sensing region is larger than the a preset area, it may be determined that the electronic device falls into water (or that there is plenty of water covering the touchscreen of the electronic device). In this case, to prevent water from entering the inside of the electronic device and therefore causing damage to other electronic components (such as a main board, a CPU, and a memory), the electronic device is controlled to power off.

### Embodiment 2

Based on a same invention concept, an embodiment of the present invention provides an electronic device, including
a first acquiring unit 201, configured to acquire a current capacitance corresponding to each sensing point on a capacitive touchscreen of the electronic device;
a computing unit 202, configured to receive the current capacitance corresponding to each sensing point from the first acquiring unit 201, and separately subtract a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen; and
a first determining unit 203, configured to receive the capacitance difference corresponding to each sensing point from the computing unit 202, and determine, according to the capacitance difference corresponding to each sensing point, a touch region on which a finger touch operation on the capacitive touchscreen acts.

In this embodiment of the present invention, optionally, the first determining unit 203 includes:
a first determining module, configured to determine a sensing region that is formed by sensing points whose capacitance difference is a negative value among all the sensing points as a first sensing region;
a second determining module, configured to determine a sensing region that is formed by sensing points whose capacitance difference is a positive value among all the sensing points as a second sensing region; and
a third determining module, configured to determine, according to a location relationship between the first sensing region and the second sensing region, the touch region on which the finger touch operation on the capacitive touchscreen acts.

In this embodiment of the present invention, optionally, the third determining module is further configured to:
if the first sensing region and the second sensing region are not connected, determine the first sensing region as the touch region on which the finger touch operation acts; and/or
if the first sensing region and the second sensing region are connected and the first sensing region is surrounded by the second sensing region, determine a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

In this embodiment of the present invention, optionally, the electronic device further includes:
a second determining unit, configured to determine the second sensing region as a water-covered region.

In this embodiment of the present invention, optionally, the electronic device further includes:
a second acquiring unit, configured to acquire an area of the second touch region; and
a control unit, configured to control the electronic device to power off when the area of the second touch region is larger than a preset area.

### Embodiment 3

Based on a same invention concept, an embodiment of the present invention provides an electronic device 100, including:
a capacitive touchscreen 120, where: as an input apparatus of the electronic device 100, the capacitive touchscreen 120, based on a capacitive sensing technology, can sense a capacitive change corresponding to a touch region generated by a finger touch, so as to determine a touch region of a finger, so that a user can, based on the capacitive touchscreen 120, implement man-machine interaction with the electronic device 100; and in addition, as a display apparatus of the electronic device, the capacitive touchscreen 120 can display visual output to the user, where the visual output may include a text, an image, a video, and any combination thereof;
a processor 110, connected to the capacitive touchscreen 120 and configured to: acquire a current capacitance corresponding to each sensing point on the capacitive touchscreen 120 of the electronic device 100; separately subtract a preset capacitance from the current capacitance corresponding to each sensing point to obtain a capacitance difference corresponding to each sensing point, where the preset capacitance is a capacitance of any one of each sensing point when there is neither water nor a finger touch operation on the capacitive touchscreen 120; and determine, according to the capacitance difference corresponding to each sensing point, a touch region on which a finger touch operation on the capacitive touchscreen 120 acts.

In this embodiment of the present invention, optionally, the processor 110 is further configured to:
determine a sensing region that is formed by sensing points whose capacitance difference is a negative value among all the sensing points as a first sensing region; determine a sensing region that is formed by sensing points whose capacitance difference is a positive value among all the sensing points as a second sensing region; and determine, according to a location relationship between the first sensing region and the second sensing region, the touch region on which the finger touch operation on the capacitive touchscreen acts.

In this embodiment of the present invention, optionally, the processor 110 is further configured to:
if the first sensing region and the second sensing region are not connected, determine the first sensing region as the touch region on which the finger touch operation acts; and/or
if the first sensing region and the second sensing region are connected and the first sensing region is surrounded by the second sensing region, determine a third sensing region that is surrounded by a first group of sensing points in the second sensing region as the touch region on which the finger touch operation acts, where the first group of sensing points are sensing points corresponding to an inflection point at which the capacitance difference turns from a decreasing trend to an increasing trend.

In this embodiment of the present invention, optionally, the processor 110 is further configured to:
determine the second sensing region as a water-covered region.

In this embodiment of the present invention, optionally, the processor 110 is further configured to:
acquire an area of the second touch region; and control the electronic device to power off when the area of the second touch region is larger than a preset area.

In this embodiment of the present invention, optionally, the electronic device 100 further includes:
a memory 170, connected to the processor 110, which may include a high-speed random access memory, and may further include a non-volatile memory, for example, one or more disk storage devices, flash memory devices or other non-volatile solid state storage devices. In some embodiments, the memory 170 may further include a memory far away from one or more processors 110, such as a network-attached storage accessed by a communications network (not shown), where the communications network may be the Internet, one or more intranets, local area networks, wide area networks, or storage area networks, or an appropriate combination thereof.

In this embodiment of the present invention, optionally, the electronic device 100 further includes:
an RF (Radio Frequency, radio frequency) circuit 150, connected to the processor 110 and configured to receive and send an electromagnetic wave. The RF circuit 150 converts an electrical signal into an electromagnetic wave, or converts an electromagnetic wave into an electrical signal, and communicates with the communications network and another
communications device by using an electromagnetic wave. The RF circuit 150 may include known circuits that are configured to execute these functions, including but not limited to an antenna system, an RF transceiver, one or more amplifiers, a tuner, one or more oscillators, a digital signal processor, and a memory. The RF circuit 150 may communicate with a network or another device by means of wireless communication, where the network may be the Internet that is referred to as the World Wide Web, an intranet, and/or a wireless network such as a cellular network or a wireless local area network.

In this embodiment of the present invention, optionally, the electronic device 100 further includes:
a WIFI module 140, connected to the processor 110 and configured to communicate with an access network by means of a WIFI signal.

In this embodiment of the present invention, optionally, the electronic device 100 further includes:
an audio frequency circuit 130, connected to the processor 110, including: a loudspeaker, a microphone, and an audio interface between a user and the electronic device 100. The audio frequency circuit 130 receives audio data from the processor 110, converts the audio data into an electrical signal, and transfers the electrical signal to the loudspeaker. The loudspeaker converts the electrical signal into a sound wave audible to human ear. The audio frequency circuit 130 further receives an electrical signal converted by the microphone from the sound wave. The audio frequency circuit 130 converts the electrical signal into audio data, and transfers the audio data to the processor 110 for processing.

In this embodiment of the present invention, optionally, the electronic device 100 further includes:
a power system 160, where the power system 160 may include a power management system, one or more power supplies (such as a battery, an alternating current, a charging system, a power failure detection circuit, a power converter or inverter, a power status indicator, and any other components that are related to power generation, management, and distribution of a portable device.)

Obviously, a person skilled in the art can make various modifications and variations to the present invention without departing from the scope of the present invention. The present invention is intended to cover these modifications and variations provided that they fall within the scope of protection defined by the following claims.

## Claims

1. An information processing method, comprising:
acquiring a current capacitance corresponding to each sensing point on a capacitive touchscreen of an electronic device;
separately subtracting a preset capacitance from the current capacitance corresponding to each sensing point to obtain a capacitance difference corresponding to each sensing point, wherein the preset capacitance is a capacitance of any one of each sensing point when there is neither water nor a finger touch operation on the capacitive touchscreen; and
determining, according to the capacitance difference corresponding to each sensing point, a touch region on which a finger touch operation on the capacitive touchscreen acts;
wherein the determining, according to the capacitance difference corresponding to each sensing point, a touch region on which a finger touch operation on the capacitive touchscreen acts comprises:
determining a sensing region that is formed by sensing points whose capacitance difference is a negative value among all the sensing points as a first sensing region;
determining a sensing region that is formed by sensing points whose capacitance difference is a positive value among all the sensing points as a second sensing region; and
determining, according to a location relationship between the first sensing region and the second sensing region, the touch region on which the finger touch operation on the capacitive touchscreen acts.

2. The method according to claim 1, wherein the determining, according to a location relationship between the first sensing region and the second sensing region, the touch region on which the finger touch operation on the capacitive touchscreen acts comprises:
if the first sensing region and the second sensing region are not connected, determining the first sensing region as the touch region on which the finger touch operation acts; and/or
if the first sensing region and the second sensing region are connected and the first sensing region is surrounded by the second sensing region, determining a third sensing region that is surrounded by a first group of sensing points in the second sensing region as the touch region on which the finger touch operation acts, wherein the first group of sensing points are sensing points corresponding to an inflection point at which the capacitance difference turns from a decreasing trend to an increasing trend.

3. The method according to claim 1 or 2, wherein the method further comprises:
determining the second sensing region as a water-covered region.

4. The method according to any one of claims 1 to 3, wherein the method further comprises:
acquiring an area of the second touch region; and
controlling the electronic device to power off when the area of the second touch region is larger than a preset area.

5. An electronic device, comprising:
a first acquiring unit (201), configured to acquire a current capacitance corresponding to each sensing point on a capacitive touchscreen of the electronic device;
a computing unit (202), configured to receive the current capacitance corresponding to each sensing point from the first acquiring unit (201), and separately subtracting a preset capacitance from the current capacitance corresponding to each sensing point to obtain a capacitance difference corresponding to each sensing point, wherein the preset capacitance is a capacitance of any one of each sensing point when there is neither water nor a finger touch operation on the capacitive touchscreen; and
a first determining unit (203), configured to receive the capacitance difference corresponding to each sensing point from the computing unit (202), and determine, according to the capacitance difference corresponding to each sensing point, a touch region on which a finger touch operation on the capacitive touchscreen acts;
wherein the first determining unit (203) comprises:
a first determining module, configured to determine a sensing region that is formed by sensing points whose capacitance difference is a negative value among all the sensing points as a first sensing region;
a second determining module, configured to determine a sensing region that is formed by sensing points whose capacitance difference is a positive value among all the sensing points as a second sensing region; and
a third determining module, configured to determine, according to a location relationship between the first sensing region and the second sensing region, the touch region on which the finger touch operation on the capacitive touchscreen acts.

6. The electronic device according to claim 5, wherein the third determining module is further configured to:
if the first sensing region and the second sensing region are not connected, determine the first sensing region as the touch region on which the finger touch operation acts; and/or
if the first sensing region and the second sensing region are connected and the first sensing region is surrounded by the second sensing region, determine a third sensing region that is surrounded by a first group of sensing points in the second sensing region as the touch region on which the finger touch operation acts, wherein the first group of sensing points are sensing points corresponding to an inflection point at which the capacitance difference turns from a decreasing trend to an increasing trend.

7. The electronic device according to claim 5 or 6, wherein the electronic device further comprises:
a second determining unit, configured to determine the second sensing region as a water-covered region.

8. The electronic device according to any one of claims 5 to 7, wherein the electronic device further comprises:
a second acquiring unit, configured to acquire an area of the second touch region; and
a control unit, configured to control the electronic device to power off when the area of the second touch region is larger than a preset area.

9. An electronic device, comprising:
a capacitive touchscreen; and
a processor, connected to the capacitive touchscreen and configured to perform the method according to any one of claims 1 to 4.

## Patentansprüche

1. Informationsverarbeitungsverfahren, umfassend:
Erfassen einer aktuellen Kapazitanz, die jedem Abtastpunkt auf einem kapazitiven Touchscreen eines elektronischen Geräts entspricht;
getrenntes Subtrahieren einer voreingestellten Kapazitanz von der aktuellen Kapazitanz, die jedem Abtastpunkt entspricht, um eine jedem Abtastpunkt entsprechende Kapazitanzdifferenz zu erhalten, wobei die voreingestellte Kapazitanz eine Kapazitanz von jedem beliebigen Abtastpunkt ist, wenn auf dem kapazitiven Touchscreen weder Wasser ist noch ein Fingerberührungsvorgang stattfindet; und
Bestimmen, gemäß der Kapazitanzdifferenz, die jedem Abtastpunkt entspricht, eines Berührungsbereichs, auf den ein Fingerberührungsvorgang auf dem kapazitiven Touchscreen wirkt;
wobei das Bestimmen, gemäß der Kapazitanzdifferenz, die jedem Abtastpunkt entspricht, eines Berührungsbereichs, auf den ein Fingerberührungsvorgang auf dem kapazitiven Touchscreen wirkt, umfasst:
Bestimmen eines Abtastbereichs, der durch Abtastpunkte gebildet wird, deren Kapazitanzdifferenz ein negativer Wert unter allen Abtastpunkten ist, als einen ersten Abtastbereich;
Bestimmen eines Abtastbereichs, der durch Abtastpunkte gebildet wird, deren Kapazitanzdifferenz ein positiver Wert unter allen Abtastpunkten ist, als einen zweiten Abtastbereich; und
Bestimmen, gemäß einer Positionsbeziehung zwischen dem ersten Abtastbereich und dem zweiten Abtastbereich, des Berührungsbereichs, auf den ein Fingerberührungsvorgang auf dem kapazitiven Touchscreen wirkt.

2. Verfahren nach Anspruch 1, wobei das Bestimmen gemäß einer Positionsbeziehung zwischen dem ersten Abtastbereich und dem zweiten Abtastbereich des Berührungsbereichs, auf den ein Fingerberührungsvorgang auf dem kapazitiven Touchscreen wirkt, umfasst:
wenn der erste Abtastbereich und der zweite Abtastbereich nicht verbunden sind, Bestimmen des ersten Abtastbereichs als den Berührungsbereich, auf den der Fingerberührungsvorgang wirkt; und/oder
wenn der erste Abtastbereich und der zweite Abtastbereich verbunden sind und der erste Abtastbereich von dem zweiten Abtastbereich umgeben ist, Bestimmen eines dritten Abtastbereichs, der von einer ersten Gruppe von Abtastpunkten in dem zweiten Abtastbereich umgeben ist, als den Berührungsbereich, auf den der Fingerberührungsvorgang wirkt, wobei die erste Gruppe von Abtastpunkten Abtastpunkte sind, die einem Wendepunkt entsprechen, bei dem die Kapazitanzdifferenz von einem abnehmenden Trend zu einem zunehmenden Trend wechselt.

3. Verfahren nach Anspruch 1 oder 2, oder wobei das Verfahren ferner umfasst:
Bestimmen des zweiten Abtastbereichs als einen wasserbedeckten Bereich.

4. Verfahren nach einem der Ansprüche 1 bis 3, wobei das Verfahren ferner umfasst:
Erfassen einer Fläche der zweiten Berührungsregion; und
Steuern des elektronischen Geräts zum Abschalten, wenn die Fläche des zweiten Berührungsbereichs größer als ein voreingestellter Bereich ist.

5. Elektronische Vorrichtung, umfassend:
eine erste Erfassungseinheit (201), die konfiguriert ist, um eine aktuelle Kapazitanz, die jedem Abtastpunkt entspricht, auf einem kapazitiven Touchscreen der elektronischen Vorrichtung zu erfassen;
eine Berechnungseinheit (202), die konfiguriert ist, um die jedem Abtastpunkt entsprechende aktuelle Kapazitanz von der ersten Erfassungseinheit (201) zu empfangen und eine voreingestellte Kapazitanz von der jedem Abtastpunkt entsprechenden aktuellen Kapazitanz getrennt zu subtrahieren, um eine jedem Abtastpunkt entsprechende Kapazitanzdifferenz zu erhalten, wobei die voreingestellte Kapazitanz eine Kapazitanz von jedem beliebigen Abtastpunkt ist, wenn auf dem kapazitiven Touchscreen weder Wasser ist noch ein Fingerberührungsvorgang stattfindet; und
eine erste Bestimmungseinheit (203), die konfiguriert ist, um die jedem Abtastpunkt entsprechende Kapazitanzdifferenz von der Berechnungseinheit (202) zu empfangen und gemäß der jedem Abtastpunkt entsprechenden Kapazitanzdifferenz einen Berührungsbereich zu bestimmen, auf den ein Fingerberührungsvorgang auf dem kapazitiven Touchscreen wirkt;
wobei die erste Bestimmungseinheit (203) umfasst:
ein erstes Bestimmungsmodul, das konfiguriert ist, um einen Abtastbereich, der durch Abtastpunkte gebildet wird, deren Kapazitanzdifferenz ein negativer Wert unter allen Abtastpunkten ist, als einen ersten Abtastbereich zu bestimmen;
ein zweites Bestimmungsmodul, das konfiguriert ist, um einen Abtastbereich, der durch Abtastpunkte gebildet wird, deren Kapazitanzdifferenz ein positiver Wert unter allen Abtastpunkten ist, als einen zweiten Abtastbereich zu bestimmen; und
ein drittes Bestimmungsmodul, das konfiguriert ist, um gemäß einer Positionsbeziehung zwischen dem ersten Abtastbereich und dem zweiten Abtastbereich den Berührungsbereich zu bestimmen, auf den ein Fingerberührungsvorgang auf dem kapazitiven Touchscreen wirkt.

6. Elektronische Vorrichtung nach Anspruch 5, wobei das dritte Bestimmungsmodul ferner konfiguriert ist, um:
wenn der erste Abtastbereich und der zweite Abtastbereich nicht verbunden sind, den ersten Abtastbereichs als den Berührungsbereich zu bestimmen, auf den der Fingerberührungsvorgang wirkt; und/oder,
wenn der erste Abtastbereich und der zweite Abtastbereich verbunden sind und der erste Abtastbereich von dem zweiten Abtastbereich umgeben ist, einen dritten Abtastbereich, der von einer ersten Gruppe von Abtastpunkten in dem zweiten Abtastbereich umgeben ist, als den Berührungsbereich zu bestimmen, auf den der Fingerberührungsvorgang wirkt, wobei die erste Gruppe von Abtastpunkten Abtastpunkte sind, die einem Wendepunkt entsprechen, bei dem die Kapazitanzdifferenz von einem abnehmenden Trend zu einem zunehmenden Trend wechselt.

7. Elektronische Vorrichtung nach Anspruch 5 oder 6, wobei die elektronische Vorrichtung ferner umfasst:
eine zweite Bestimmungseinheit, die konfiguriert ist, um den zweiten Abtastbereich als einen wasserbedeckten Bereich zu bestimmen.

8. Elektronische Vorrichtung nach einem der Ansprüche 5 bis 7, wobei die elektronische Vorrichtung ferner umfasst:
eine zweite Erfassungseinheit, die konfiguriert ist, um eine Fläche der zweiten Berührungsregion zu erfassen; und
eine Steuereinheit, die konfiguriert ist, um die elektronische Vorrichtung zum Abschalten zu steuern, wenn die Fläche des zweiten Berührungsbereiches größer als ein voreingestellter Bereich ist.

9. Elektronische Vorrichtung, umfassend:
einen kapazitiven Touchscreen; und
einen Prozessor, der mit dem kapazitiven Touchscreen verbunden und konfiguriert ist, um das Verfahren nach einem der Ansprüche 1 bis 4 durchzuführen.

## Revendications

1. Procédé de traitement d'informations comprenant :
l'acquisition d'une capacité courante correspondant à chaque point de détection sur un écran tactile capacitif d'un dispositif électronique ;
la soustraction séparée d'une capacité prédéfinie de la capacité courante correspondant à chaque point de détection de façon à obtenir une différence de capacité correspondant à chaque point de détection, cette capacité prédéfinie étant une capacité de n'importe lequel de chaque point de détection lorsqu'il n'y a ni eau, ni aucune opération tactile sur l'écran tactile capacitif ; et
la détermination, en fonction de la différence de capacité correspondant à chaque point de détection, d'une région tactile sur laquelle une opération tactile sur l'écran tactile capacitif agit ;
la détermination, en fonction de la différence de capacité correspondant à chaque point de détection, d'une région tactile sur laquelle une opération tactile sur l'écran tactile capacitif agit comprenant :
la détermination d'une région de détection qui est formée par des points de détection dont la différence de capacité est une valeur négative parmi tous les points de détection comme une première région de détection ;
la détermination d'une région de détection qui est formée par des points de détection dont la différence de capacité est une valeur positive parmi tous les points de détection comme une deuxième région de détection ; et
la détermination, en fonction d'un rapport d'emplacements entre la première région de détection et la deuxième région de détection, de la région tactile sur laquelle l'opération tactile sur l'écran tactile capacitif agit.

2. Procédé selon la revendication 1, dans lequel la détermination, en fonction d'un rapport d'emplacements entre la première région de détection et la deuxième région de détection, de la région tactile sur laquelle l'opération tactile sur l'écran tactile capacitif agit comprend :
si la première région de détection et la deuxième région de détection ne sont pas connectées, la détermination de la première région de détection comme la région tactile sur laquelle l'opération tactile agit ; et/ou
si la première région de détection et la deuxième région de détection sont connectées et que la première région de détection est entourée par la deuxième région de détection, la détermination d'une troisième région de détection qui est entourée par un premier groupe de points de détection dans la deuxième région de détection comme la région tactile sur laquelle l'opération tactile agit, ce premier groupe de points de détection étant des points de détection correspondant à un point d'inflexion auquel la différence de capacité passe d'une tendance décroissante à une tendance croissante.

3. Procédé selon la revendication 1 ou 2, ce procédé comprenant en outre :
la détermination de la deuxième région de détection comme une région couverte d'eau.

4. Procédé selon l'une quelconque des revendications 1 à 3, ce procédé comprenant en outre :
l'acquisition d'une surface de la deuxième région tactile ; et
la commande du dispositif électronique pour qu'il se mette hors tension lorsque la surface de la deuxième région tactile est plus grande qu'une surface prédéfinie.

5. Dispositif électronique, comprenant :
une première unité d'acquisition (201), configurée de façon à acquérir une capacité courante correspondant à chaque point de détection sur un écran tactile capacitif de ce dispositif électronique ;
une unité de calcul (202), configurée de façon à recevoir de la première unité d'acquisition (201) la capacité correspondant à chaque point de détection, et soustrayant séparément une capacité prédéfinie de la capacité courante correspondant à chaque point de détection de façon à obtenir une différence de capacité correspondant à chaque point de détection, cette capacité prédéfinie étant une capacité de n'importe lequel de chaque point de détection lorsqu'il n'y a ni eau, ni aucune opération tactile sur l'écran tactile capacitif ; et
une première unité de détermination (203), configurée de façon à recevoir de l'unité de calcul (202) la différence de capacité correspondant à chaque point de détection, et à déterminer, en fonction de de la différence de capacité correspondant à chaque point de détection, une région tactile sur laquelle une opération tactile sur l'écran tactile capacitif agit ;
cette première unité de détermination (203) comprenant :
un premier module de détermination, configuré de façon à déterminer une région de détection qui est formée par des points de détection dont la différence de capacité est une valeur négative parmi tous les points de détection comme une première région de détection ;
un deuxième module de détermination, configuré de façon à déterminer une région de détection qui est formée par des points de détection dont la différence de capacité est une valeur positive parmi tous les points de détection comme une deuxième région de détection ; et
un troisième module de détermination, configuré de façon à déterminer, en fonction d'un rapport d'emplacements entre la première région de détection et la deuxième région de détection, la région tactile sur laquelle l'opération tactile sur l'écran tactile capacitif agit.

6. Dispositif électronique selon la revendication 5, dans lequel le troisième module de détermination est configuré en outre de façon à :
si la première région de détection et la deuxième région de détection ne sont pas connectées, déterminer la première région de détection comme la région tactile sur laquelle l'opération tactile agit ; et/ou à
si la première région de détection et la deuxième région de détection sont connectées et que la première région de détection est entourée par la deuxième région de détection, déterminer une troisième région de détection qui est entourée par un premier groupe de points de détection dans la deuxième région de détection comme la région tactile sur laquelle l'opération tactile agit, ce premier groupe de points de détection étant des points de détection correspondant à un point d'inflexion auquel la différence de capacité passe d'une tendance décroissante à une tendance croissante.

7. Dispositif électronique selon la revendication 5 ou 6, ce dispositif électronique comprenant en outre :
une deuxième unité de détermination, configurée de façon à déterminer la deuxième région de détection comme une région couverte d'eau.

8. Dispositif électronique selon l'une quelconque des revendications 5 à 7, ce dispositif électronique comprenant en outre :
une deuxième unité d'acquisition, configurée de façon à acquérir une surface de la deuxième région de détection ; et
une unité de commande, configurée de façon à commander le dispositif électronique pour qu'il se mette hors tension lorsque la surface de la deuxième région tactile est plus grande qu'une surface prédéfinie.

9. Dispositif électronique, comprenant :
un écran tactile capacitif ; et
un processeur, connecté à l'écran tactile capacitif et configuré de façon à exécuter le procédé selon l'une quelconque des revendications 1 à 4.
